# EUROPÄISCHE PATENTSCHRIFT

(11) **EP 1 788 462 B1**
(45) Veröffentlichungstag und Bekanntmachung des Hinweises auf die Patenterteilung: **02.03.2011**
(21) Anmeldenummer: 05025357.4
(22) Anmeldetag: 21.11.2005
(51) Int. Cl.: G05B 19/042

(54) **Strukturierung und Verwaltung von technologischen Funktionen einer Automatisierungsanlage**
Structuring and managing the technological functions of an automation system
Structuration et gestion de fonctions technologiques d'un système d'automatisation

(43) Veröffentlichungstag der Anmeldung: 23.05.2007
(73) Patentinhaber: SIEMENS AKTIENGESELLSCHAFT, 80333 München (DE)
(72) Erfinder: Eichhorn, Annette, 91093 Hessdorf (DE); Mangler, Gabrielle, 90482 Nürnberg (DE); Hey, Uwe, 90475 Nürnberg (DE); Munoz Ibarra, Pablo, 91058 Erlangen (DE); Odemer, Rolf, 91074 Herzogenaurach (DE)

(56) Entgegenhaltungen:
- EP-A- 1 087 275
- EP-A- 1 310 841
- WO-A-2005/022286
- DE-A1- 19 917 102
- FR-A- 2 864 287
- US-B1- 6 643 555

## Beschreibung

Die Erfindung betrifft ein System und ein Verfahren zur Strukturierung und Verwaltung von technologischen Funktionen einer Automatisierungsanlage. Automatisierungsanlagen dienen der Automatisierung technischer Prozesse bzw. technischer Vorgänge, insbesondere im industriellen Umfeld. Automatisierungsanlagen, auch als Automatisierungssysteme bezeichnet, werden üblicherweise mit einem so genannten Projektierungssystem, auch Engineering System genannt, projektiert. Ein solches Projektierungssystem besitzt üblicherweise einen graphischen Editor, mit welchem Komponenten der Automatisierungsanlage angeordnet werden können und Kommunikationsbeziehungen zwischen diesen Komponenten projektiert werden können.

Derartige Beispiele sind in der EP-A-1310841 und WO 2005/022286 beschrieben.

Der Erfindung liegt die Aufgabe zugrunde, die Strukturierung und Verwaltung von technologischen Funktionen einer Automatisierungsanlage für die Komponenten-basierte Automatisierung zu vereinfachen.

Diese Aufgabe wird durch ein System und ein entsprechendes Verfahren zur Strukturierung und Verwaltung von technologischen Funktionen einer Automatisierungsanlage gemäß dem Gegenstand der unabhängigen Ansprüche 1 und 8 gelöst.

Die Erfindung beruht auf der Erkenntnis, dass die Strukturierung und Verwaltung von technologischen Funktionen dadurch vereinfacht wird, dass unterschiedliche Sichten auf die Automatisierungsanlage bereitgestellt werden. Die Strukturen von Komponenten der Automatisierungsanlage sind dabei mittels einer Anlagensicht darstellbar. Technologische Funktionen der Automatisierungsanlage sind sowohl in dieser Anlagensicht als auch in einer Plansicht darstellbar. In der Plansicht können Funktionen insbesondere hierarchisch strukturiert dargestellt werden, wobei Funktionen in Plänen zusammengefasst werden können, welche selbst wieder aggregiert werden können. Damit lässt sich somit eine funktionale Anlagenhierarchie darstellen. Damit sind sowohl Komponenten-basierte Aspekte der Automatisierungsanlage als auch funktionelle Aspekte der Anlage darstellbar. Dadurch, dass eine Funktion sowohl in der Anlagensicht als auch in der Plansicht darstellbar ist, wird die Verknüpfung dieser beiden Sichten sichergestellt.

Gemäß der Erfindung sind die Anlagensicht und die Plansicht derart miteinander gekoppelt, dass durch eine Selektion einer Funktion in der Plansicht gleichzeitig die Funktion in der Anlagensicht selektiert ist. Dem Anwender wird es somit ermöglicht, sowohl die Funktion in der Plansicht als auch deren Repräsentation in der Anlagensicht zu selektieren, und das mit einem einzigen Selektionsvorgang.

Grundzüge der Komponenten-basierten Automatisierung werden gemäß einer weiteren vorteilhaften Ausgestaltung der Erfindung dadurch realisiert, dass einer Komponente jeweils ein Automatisierungsgerät und zugehörige technologische Funktionen fest zugeordnet sind. Durch die feste Zuordnung der technologischen Funktionen zu einem Automatisierungsgerät lassen sich die Komponenten leichter handhaben.

Um die Auswahl von Komponenten zu erleichtern, wird gemäß einer weiteren vorteilhaften Ausgestaltung der Erfindung vorgeschlagen, dass Komponenten in Bibliotheken verwaltbar sind, wobei die Komponenten in der jeweiligen Bibliothek auswählbar und in der Anlagensicht instanziierbar sind. Ein Anwender kann somit komfortabel vorgefertigte Komponenten in einer Bibliothek auswählen und an beliebiger Stelle in der Anlagensicht eine Instanz davon erzeugen.

Gemäß einer weiteren vorteilhaften Ausgestaltung der Erfindung sind die technologischen Funktionen in der Plansicht und in der Anlagensicht auswählbar. Die technologischen Funktionen können somit an beliebiger Stelle des Systems zur Strukturierung und Verwaltung der Funktionen ausgewählt werden und platziert werden.

Um für eine bestimmte Automatisierungslösung nicht benötigte Funktionen inaktiv schalten zu können, wird gemäß einer weiteren vorteilhaften Ausgestaltung der Erfindung vorgesehen, dass technologische Funktionen einer instanziierten Komponente deaktivierbar sind. Dadurch, dass die technologischen Funktionen nur deaktiviert werden und nicht gelöscht werden müssen, sind sie für spätere Anpassungen jederzeit wieder aktivierbar.

Gemäß einer weiteren vorteilhaften Ausgestaltung der Erfindung haben in der Plansicht mit technologischen Funktionen durchführbare Existenzoperationen (d. h. Löschen, Kopieren, Ausschneiden, Einfügen, etc.) Auswirkungen auf die technologischen Funktionen in der Anlagensicht. Damit ist sichergestellt, dass Funktionen durch Existenzoperationen sowohl in der Anlagensicht als auch in der Plansicht konsistent bleiben.

Um eine Komponente auch in der Plansicht löschen zu können, wird gemäß einer weiteren vorteilhaften Ausgestaltung der Erfindung vorgeschlagen, dass eine Komponente in der Anlagensicht durch Löschen aller der ihr zugeordneten technologischen Funktionen in der Plansicht löschbar ist.

Nachfolgend wird die Erfindung anhand der in den Figuren dargestellten Ausführungsbeispiele näher beschrieben und erläutert.

Es zeigen:
- FIG 1: Komponenten einer Automatisierungsanlage,
- FIG 2: einen graphischen Editor eines Engineering Systems,
- FIG 3: die Darstellung einer Funktion in Plansicht und Anlagensicht,
- FIG 4: die Deaktivierung einer Funktion,
- FIG 5: die Selektion eines Plans,
- FIG 6 und 7: die flexible Verschiebung einer Funktion in der Plansicht und
- FIG 8: die Deaktivierung einer Funktion in der Anlagensicht.

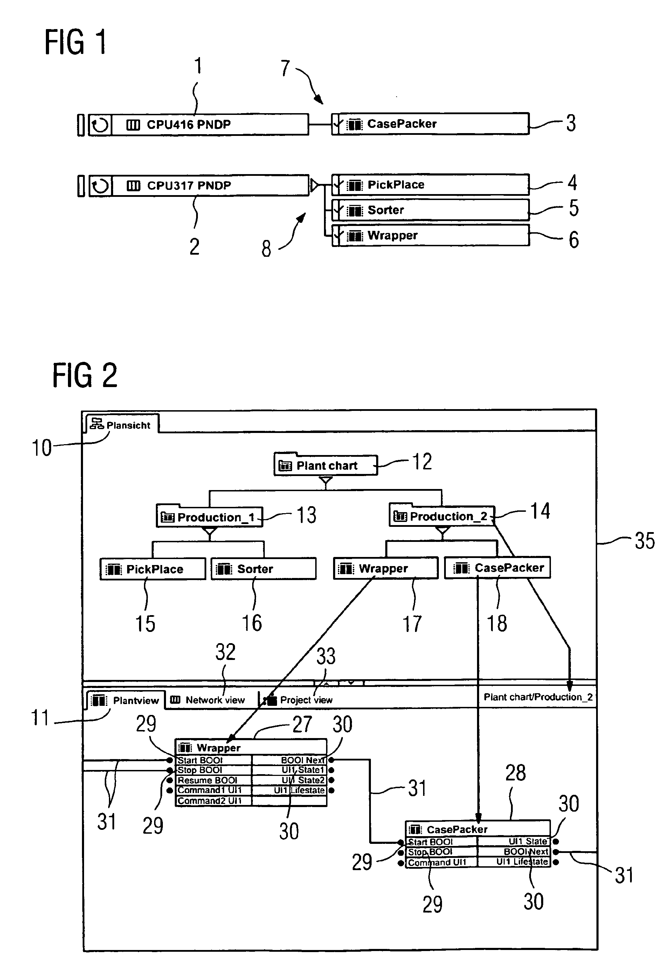

Bei der Komponenten-basierten Automatisierung (CBA = Component Based Automation) werden technologische Module durch eine Komponente 7, 8 repräsentiert. FIG 1 zeigt solche Komponenten 7, 8 einer Automatisierungsanlage. Eine Komponente 7, 8 besteht aus einem Gerät 1, 2 und ihren zugehörigen technologischen Funktionen 3 bzw. 4, 5, 6. Die technologischen Funktionen 3 - 6 sind üblicherweise als Softwarefunktionen realisiert. Ein Gerät 1, 2 kann mehrere technologische Funktionen 3 - 6 enthalten, welche ihm jeweils fest zugeordnet sind (so genannte Komponentenkapselung). Anderen Geräten 1, 2 können diese Funktionen nicht zugeordnet werden. Möchte ein Anwender nur einige ausgewählte Funktionen 3 - 6 einer Komponente 7, 8 verwenden, so bedarf es eines Mittels zur willkürlichen Einschränkung der zum Einsatz kommenden Funktionen 3 - 6. Das Ausführungsbeispiel der Erfindung erfüllt dabei folgende Anforderungen: Die ausgewählten technologischen Funktionen können Anlagenplänen durch graphisches Drag & Drop zugeordnet werden. Zudem können sowohl Pläne als auch technologische Funktionen auf einfache Weise kopiert, gelöscht oder in der Planhierarchie verschoben werden. Das heißt z.B. auch, dass eine Funktion in einem Plan verwendet werden kann, unabhängig davon, zu welchem Gerät 1, 2 sie gehört oder ob ihre Geschwisterfunktionen (in der Fachsprache auch Siblings genannt) verwendet werden oder nicht. Gemäß dem hier dargestellten Ausführungsbeispiel der Erfindung werden zudem Lösungen angeboten für den Fall, dass ein Anwender eine Funktion unabhängig von den anderen Geschwisterfunktionen (diese könnten in anderen Plänen in Verwendung sein) löscht oder kopiert. Es wird somit eine komfortable Strukturierung einer Automatisierungsanlage ermöglicht, welche auf dem CBA-Konzept basiert.

Elemente gleicher Funktion sind in den Figuren jeweils mit dem gleichen Bezugszeichen gekennzeichnet.

FIG 2 zeigt einen graphischen Editor eines Engineering Systems. Der Editor zeigt sowohl eine Plansicht 10 als auch Anlagensichten 11, 32, 33. Komponenten 7, 8 gemäß FIG 1 werden beispielsweise in Bibliotheken des graphischen Tools verwaltet. Der Anwender kann solche Komponenten 7, 8 per Drag & Drop aus der Bibliothek in einen der graphischen Editoren platzieren, z.B. in eine Anlagensicht 11, 32, 33, wodurch Instanzen dieser Komponenten 7, 8 entstehen. FIG 1 zeigt die Darstellung von Instanzen mit einer oder mehreren Funktionen 3 bzw. 4 - 6 in der so genannten Projektsicht, welche eine Anlagensicht darstellt. Die Funktionen 3 - 6 eines Geräts 1, 2 sind feste Bestandteile der jeweiligen Komponente 7, 8, welche mit dem Engineering System nicht getrennt oder neu zugeordnet werden können. Das bedeutet, dass der Anwender ein technologisches Modul, d.h. eine Komponente 7, 8, immer als Ganzes instanziieren muss. Durch das erfindungsgemäße Verfahren und dessen Ausgestaltungen wird ein Anwender trotz der festen Beziehung zwischen Gerät und Funktionen in die Lage versetzt, eine gesamte Anlage graphisch in einer so genannten Anlagenhierarchie in der Plansicht 10 zu strukturieren, einzelne Funktionen einer im Projekt verwendeten Komponente (= Instanz), welche nicht technologisch eingebunden werden sollen, zu deaktivieren und Instanzen von Komponenten in der Plansicht 10 zu kopieren und löschen zu können, auch wenn nicht alle Funktionen der jeweiligen Komponente explizit selektiert sind.

Gemäß FIG 2 bietet die Plansicht 10 eine graphische Übersicht über die gesamte Automatisierungsanlage. Dabei sind hierarchisch gegliederten Plänen 12, 13, 14 der Automatisierungsanlage jeweils Funktionen 15 - 18 zugeordnet. Neben der Plansicht 10 sind in dem graphischen Editor 35 auch Anlagensichten 11, 32, 33 auswählbar. In der in FIG 2 dargestellten Anlagensicht 11 sind die technologischen Funktionen 17, 18 gemäß Plansicht 10 in ihrer Repräsentanz 27 bzw. 28 in der Anlagensicht 11 dargestellt. In der Anlagensicht 11 sind diese Funktionen 27, 28 genauer dargestellt als in der übergeordneten Plansicht 10. Die Funktionen 27, 28 weisen Eingänge 29 sowie Ausgänge 30 auf, welche gegebenenfalls durch Kommunikationsverbindungen 31 miteinander verbunden sind.

Um die gesamte Anlage graphisch in einer so genannten Anlagenhierarchie strukturieren zu können, wird die Anlage in der Plansicht 10 dargestellt. Befinden sich mehrere Instanzen einer Komponente 7, 8 in Verwendung, kann es passieren, dass aus technologischer Sicht Funktionen eines Gerätes 1, 2 in verschiedenen Plänen 12, 13, 14 der Anlagenhierarchie verwendet werden. Eine Funktion ist üblicherweise in Verwendung, wenn diese in einem Plan 12, 13, 14 platziert ist und möglicherweise mit einer anderen Funktion verschaltet ist. Der Anwender möchte jedoch Funktionen unabhängig von deren Sibling-Beziehungen oder deren Gerätezugehörigkeit zwischen Plänen 12, 13, 14 frei verschieben und kopieren können.

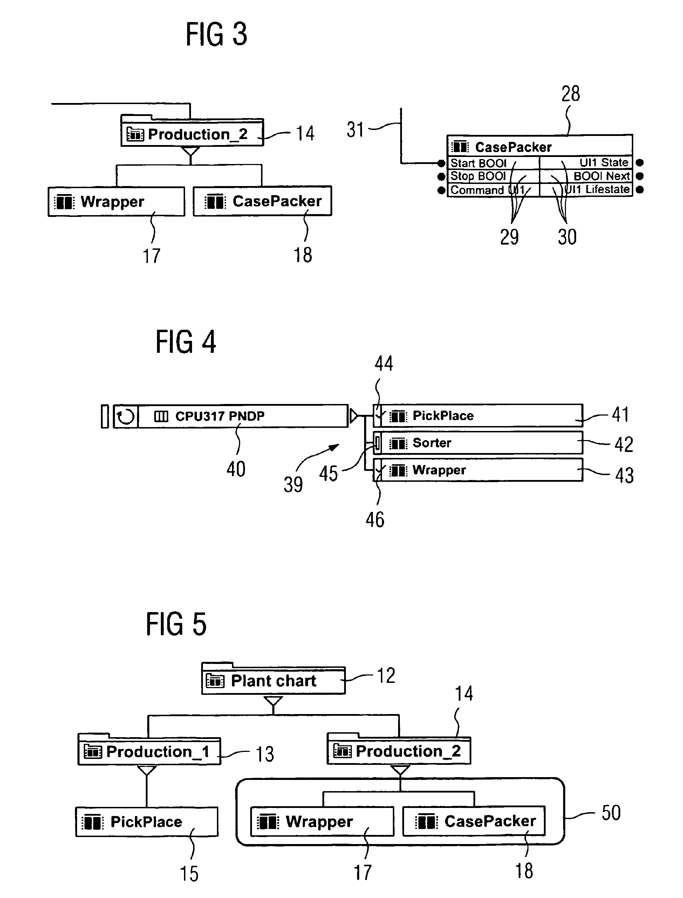

FIG 3 zeigt die Darstellung einer Funktion in Plansicht und Anlagensicht. Ein und dieselbe Funktion 18 bzw. 28 wird in dem Ausführungsbeispiel der Erfindung sowohl in der Plansicht als auch in der Anlagensicht dargestellt. Durch die Selektion der Funktion 18 in der Plansicht wird gleichzeitig die Repräsentanz 28 der Funktion in der Anlagensicht selektiert, wodurch das Auffinden der Funktionen in den verschiedenen Sichten sehr einfach ist. Die Existenzoperationen Löschen, Kopieren, Ausschneiden und Einfügen funktionieren in beiden Editoren/Sichten gleich.

FIG 4 zeigt die Deaktivierung einer Funktion. Die in FIG 4 dargestellte Komponente 39 besteht aus dem Gerät 40 und den Funktionen 41 - 43. Diese Komponente 39 wird beispielsweise per Drag & Drop in ein Projekt eingebracht (instanziiert), so dass eine neue Instanz des Automatisierungsgeräts 40 entsteht. Ebenso entstehen Instanzen der hierauf implementierten Funktionen 41 - 43. Möchte ein Anwender nur die Funktionen 41 und 43 nutzen, die Funktion 42 jedoch nicht, dann kann er die Funktion 42 als "nicht verwendet" kennzeichnen. So kann der Anwender mehrere Instanzen der Komponente 39 verwenden, aber die einzelnen darin enthaltenen Funktionen 41 - 43 je nach Bedarf nutzen oder auch nicht. Diese Kennzeichnung geschieht entweder implizit durch Platzieren der neuen Instanz innerhalb oder außerhalb des Kontexts eines Planes, oder explizit durch Zuordnung des jeweiligen Funktionsobjektes zu einem Plan oder durch Herausnehmen dieses Objekts aus der Anlagenhierarchie. Gemäß FIG 4 wird die Funktion 42 (Sorter) nicht gebraucht, also wird diese mit dem Symbol 45 als "nicht verwendet" gekennzeichnet. Die verwendeten Funktionen 41, 43 sind entsprechende Kennzeichnungen 44, 46 als aktiv gekennzeichnet.

Während das Verschieben von Funktionen keinerlei Änderung an der Existenz der beteiligten Instanzen bewirkt, sind das Kopieren, Löschen und das Ausschneiden von Funktionen so genannte Existenzoperationen auf den zugehörigen Instanzen. Nur komplette Instanzen können gelöscht und/oder kopiert werden. Das Löschen und Kopieren von Plänen wirkt transitiv. Das heißt, dass ein selektierter Plan für die Operationen Löschen und Kopieren stellvertretend für alle in ihm gegebenenfalls rekursiv enthaltenen Funktionen steht. Gemäß FIG 5 wirkt somit der selektierte Plan 14 stellvertretend für die in ihm enthaltenen Funktionen 17, 18. Die Menge 50 selektierter Funktionen kann dann, und nur dann, für das Löschen ihrer Instanzen stellvertretend herangezogen werden, wenn es keine Geschwisterfunktionen von ihnen gibt, die verwendet, aber nicht selektiert sind. Es ist also möglich, zu löschende Instanzen durch ausschließliche Selektion ihrer verwendeten Funktionen zu identifizieren, aber es ist nicht möglich, für die Auswahl einer zu löschenden Instanz eine verwendete Funktion nicht zu selektieren. Kann eine gegebene Menge 50 von selektierten Funktionen 17, 18 (wegen Unvollständigkeit in obigem Sinne) nicht gelöscht werden, so wird ein ersatzweises Entfernen dieser Funktionen aus der Anlagenhierarchie angeboten.

Während nur solche Mengen selektierter Funktionen löschbar sind, die sämtliche verwendete Funktionen der betroffenen Instanzen beinhalten, sind auch Teilmengen hiervon kopierbar. Instanzen können also auch dann kopiert werden, wenn sie nur partiell selektiert sind. Der Unterschied zwischen partieller und vollständiger Selektion beim Kopieren besteht im Verhalten beim nachfolgenden Einfügen. Hierbei werden alle Kopien der ehedem selektierten Funktionen in den gegebenenfalls vorhandenen Plankontext der Einfügeoperation eingefügt und als "verwendet" gekennzeichnet, während alle anderen neuen Funktionen ohne Planzuordnung bleiben und als "nicht verwendet" gekennzeichnet werden. Dabei spielt es keine Rolle, ob die ehedem selektierte Funktion selbst einem Plan zugeordnet war oder nicht.

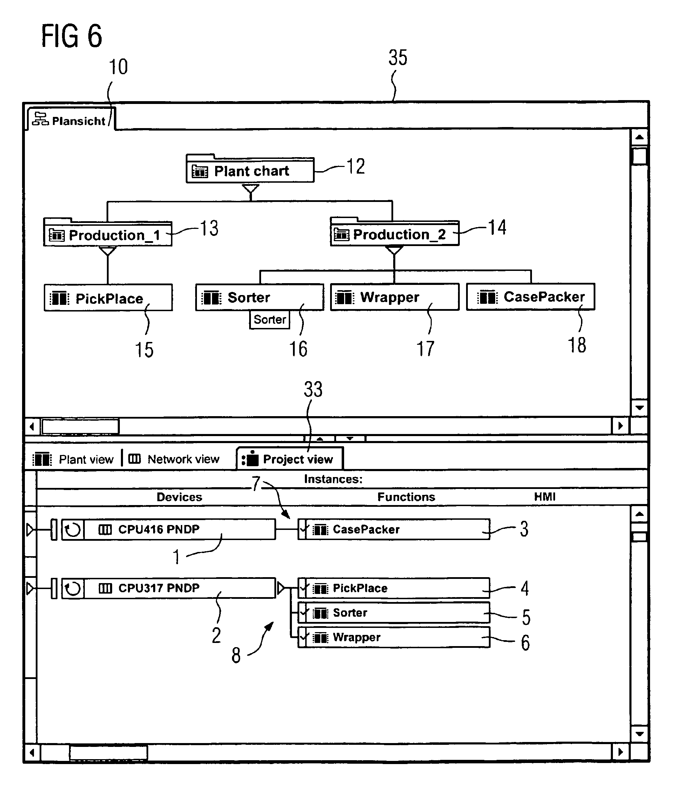

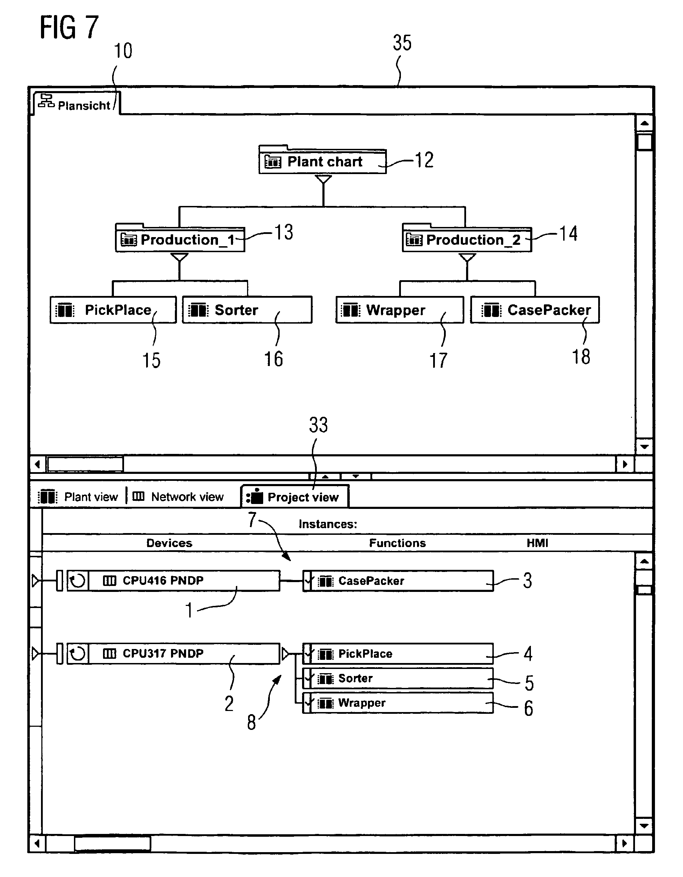

Der Anwender kann jederzeit nach Belieben die Zuordnung von Funktionen zu Plänen neu definieren. Eine besondere Form der Zuordnung ist das Herausnehmen aus allen Plänen (Deaktivieren oder Kennzeichnen als "nicht verwendet". FIG 6 und 7 zeigen die flexible Verschiebung einer Funktion in der Plansicht. Dabei soll die Funktion 16 gemäß Plansicht 10, welche der Funktion 5 gemäß Anlagensicht 33 des Geräts 2 entspricht, vom Plan 14 in den Plan 13 unabhängig von der Gerätezugehörigkeit verschoben werden. FIG 7 zeigt das Ergebnis der Verschiebung. Die Funktion 5, 16 des Geräts 2 wurde vom Plan 14 in den Plan 13 verschoben. Ihre Gerätezugehörigkeit bleibt davon gänzlich unbetroffen.

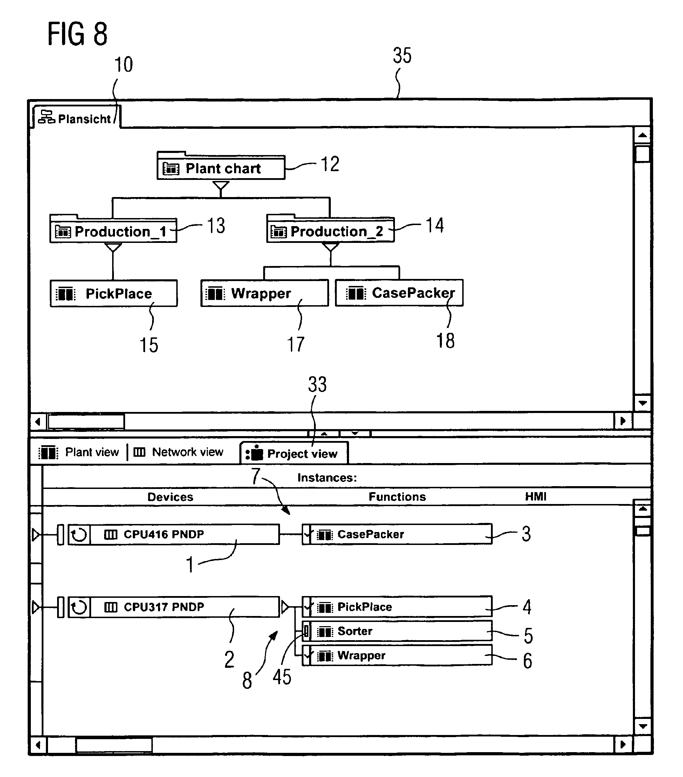

FIG 8 zeigt, dass durch das Deaktivieren der Funktion 5 in der Anlagensicht diese nicht gelöscht wird, sondern lediglich aus der Planhierarchie gemäß Plansicht 10 entfernt und als "nicht verwendet" gekennzeichnet wird.

## Patentansprüche

1. System zur Strukturierung und Verwaltung von technologischen Funktionen (3..6, 15..18) einer Automatisierungsanlage, bei welchem Komponenten (7, 8) der Automatisierungsanlage mittels einer Anlagensicht (33) strukturiert werden und eine Funktion (3..6_{,} 15..18) jeweils in der Anlagensicht (33) und in einer Plansicht (10) dargestellt wird, wobei einer Komponente jeweils ein Automatisierungsgerät (1,2) und zugehörige technologische Funktionen (3...6) zugeordnet sind, und wobei Anlagensicht (33) und Plansicht (10) derart miteinander gekoppelt sind, dass durch eine Selektion einer Funktion (15..18) in der Plansicht (10) gleichzeitig die Funktion (3..6) in der Anlagensicht (33) selektiert ist.

2. System nach Anspruch 1,
**dadurch gekennzeichnet,**
**dass** einer Komponente (7, 8) jeweils ein Automatisierungsgerät (1, 2) und zugehörige technologische Funktionen (3..6) fest zugeordnet sind.

3. System nach einem der vorhergehenden Ansprüche,
**dadurch gekennzeichnet,**
**dass** Komponenten (7, 8) in Bibliotheken verwaltbar sind, wobei die Komponenten (7, 8) in der jeweiligen Bibliothek auswählbar und in der Anlagensicht (33) instanziierbar sind.

4. System nach einem der vorhergehenden Ansprüche,
**dadurch gekennzeichnet,**
**dass** technologische Funktionen (3..6, 15..18) in der Plansicht (10) und in der Anlagensicht (33) auswählbar sind.

5. System nach einem der vorhergehenden Ansprüche,
**dadurch gekennzeichnet,**
**dass** technologische Funktionen (3..6, 15..18) einer instanziierten Komponente (7, 8) deaktivierbar sind.

6. System nach einem der vorhergehenden Ansprüche,
**dadurch gekennzeichnet,**
**dass** in der Plansicht (10) mit technologischen Funktionen (15..18) durchführbare Existenzoperationen Auswirkungen auf die technologischen Funktionen (3..6) in der Anlagensicht (33) haben.

7. System nach einem der vorhergehenden Ansprüche,
**dadurch gekennzeichnet,**
**dass** eine Komponente (7, 8) in der Anlagensicht (33) durch Löschen aller der ihr zugeordneten technologischen Funktionen (15..18) in der Plansicht löschbar ist.

8. Verfahren zur Strukturierung und Verwaltung von technologischen Funktionen (3..6, 15..18) einer Automatisierungsanlage, bei welchem Komponenten (7, 8) der Automatisierungsanlage mittels einer Anlagensicht (33) strukturiert werden und eine Funktion (3..6, 15..18) jeweils in der Anlagensicht (33) und in einer Plansicht (10) dargestellt wird, wobei einer Komponente jeweils ein Automatisierungsgerät (1,2) und zugehörige technologische Funktionen (3...6) zugeordnet sind, und wobei Anlagensicht (33) und Plansicht (10) derart miteinander gekoppelt sind, dass durch eine Selektion einer Funktion (15..18) in der Plansicht (10) gleichzeitig die Funktion (3..6) in der Anlagensicht (33) selektiert wird.

9. Verfahren nach Anspruch 8,
**dadurch gekennzeichnet,**
**dass** einer Komponente (7, 8) jeweils ein Automatisierungsgerät (1, 2) und zugehörige technologische Funktionen (3..6) fest zugeordnet werden.

10. Verfahren nach einem der Ansprüche 8, 9,
**dadurch gekennzeichnet,**
**dass** Komponenten (7, 8) in Bibliotheken verwaltet werden, wobei die in der jeweiligen Bibliothek ausgewählten Komponenten (7, 8) in der Anlagensicht (33) instanziiert werden.

11. Verfahren nach einem der Ansprüche 8 bis 10,
**dadurch gekennzeichnet,**
**dass** technologische Funktionen (3..6, 15..18) in der Plansicht (10) und in der Anlagensicht (33) ausgewählt werden.

12. Verfahren nach einem der Ansprüche 8 bis 11,
**dadurch gekennzeichnet,**
**dass** technologische Funktionen (3..6, 15..18) einer instanziierten Komponente (7, 8) bei Bedarf deaktiviert werden.

13. Verfahren nach einem der Ansprüche 8 bis 12,
**dadurch gekennzeichnet,**
**dass** in der Plansicht (10) mit technologischen Funktionen (15..18) durchgeführte Existenzoperationen Auswirkungen auf die technologischen Funktionen (3..6) in der Anlagensicht (33) haben.

14. Verfahren nach einem der Ansprüche 8 bis 13,
**dadurch gekennzeichnet,**
**dass** eine Komponente (7, 8) in der Anlagensicht (33) durch Löschen aller der ihr zugeordneten technologischen Funktionen (15..18) in der Plansicht gelöscht wird.

## Claims

1. System for structuring and managing technological functions (3..6, 15..18) of an automation installation, in which components (7, 8) of the automation installation are structured using an installation view (33) and a function (3..6, 15..18) is respectively presented in the installation view (33) and in a layout view (10), wherein a component respectively has an associated automation appliance (1, 2) and associated technological functions (3..6), and wherein the installation view (33) and the layout view (10) are coupled to one another such that selection of a function (15..18) in the layout view (10) simultaneously selects the function (3..6) in the installation view (33).

2. System according to Claim 1,
**characterized**
**in that** a component (7, 8) respectively has a permanently associated automation appliance (1, 2) and permanently associated technological functions (3..6).

3. System according to one of the preceding claims,
**characterized**
**in that** components (7, 8) can be managed in libraries, wherein the components (7, 8) can be selected in the respective library and can be instantiated in the installation view (33).

4. System according to one of the preceding claims,
**characterized**
**in that** technological functions (3..6), (15..18) can be selected in the layout view (10) and in the installation view (33).

5. System according to one of the preceding claims,
**characterized**
**in that** technological functions (3..6), (15..18) of an instantiated component (7, 8) can be deactivated.

6. System according to one of the preceding claims,
**characterized**
**in that** existence operations which can be performed with technological functions (15..18) in the layout view (10) affect the technological functions (3..6) in the installation view (33).

7. System according to one of the preceding claims,
**characterized**
**in that** a component (7, 8) in the installation view (33) can be erased by erasing all of the technological functions (15..18) associated therewith in the layout view.

8. Method for structuring and managing technological functions (3..6), (15..18) of an automation installation, in which components (7, 8) of the automation installation are structured using an installation view (33) and a function (3..6, 15..18) is respectively presented in the installation view (33) and in a layout view (10), wherein a component respectively has an associated automation appliance (1, 2) and associated technological functions (3..6), and wherein the installation view (33) and the layout view (10) are coupled to one another such that selection of a function (15..18) in the layout view (10) simultaneously selects the function (3..6) in the installation view (33).

9. Method according to Claim 8,
**characterized**
**in that** a component (7, 8) respectively has a permanently associated automation appliance (1, 2) and permanently associated technological functions (3..6).

10. Method according to one of Claims 8 and 9,
**characterized**
**in that** components (7, 8) are managed in libraries, wherein the components (7, 8) selected in the respective library are instantiated in the installation view (33).

11. Method according to one of Claims 8 to 10,
**characterized**
**in that** technological functions (3..6, 15..18) are selected in the layout view (10) and in the installation view (33).

12. Method according to one of Claims 8 to 11,
**characterized**
**in that** technological functions (3..6), (15..18) of an instantiated component (7, 8) are deactivated when needed.

13. Method according to one of Claims 8 to 12,
**characterized**
**in that** existence operations performed with technological functions (15..18) in the layout view (10) affect the technological functions (3..6) in the installation view (33).

14. Method according to one of Claims 8 to 13,
**characterized**
**in that** a component (7, 8) in the installation view (33) is erased by erasing all of the technological functions (15..18) associated therewith in the layout view.

## Revendications

1. Système de structuration et de gestion de fonctions ( 3..6, 15..18 ) technologiques d'une installation d'automatisation, dans lequel des éléments ( 7, 8 ) de l'installation d'automatisation sont structurés au moyen d'une vue ( 33 ) de l'installation, dans laquelle une fonction ( 3..6, 15..18 ) est représentée respectivement dans la vue ( 33 ) de l'installation et dans une vue ( 10 ) de projet, respectivement un appareil ( 1, 2 ) d'automatisation et des fonctions ( 3..6 ) technologiques qui lui appartiennent étant associées à un élément, la vue ( 33 ) d'installation et la vue ( 10 ) de projet étant couplées l'une à l'autre, de manière à ce que la fonction ( 3..6 ) dans la vue ( 33 ) de l'installation soit sélectionnée en même temps par une sélection d'une fonction ( 15..18 ) dans la vue (10) de projet.

2. Système suivant la revendication 1,
**caractérisé en ce que**
respectivement, un appareil ( 1, 2 ) d'automatisation et des fonctions ( 3...6 ) technologiques qui lui appartiennent sont associées de manière fixe à un élément ( 7, 8 ).

3. Système suivant l'une des revendications précédentes,
**caractérisé en ce que**
des éléments ( 7, 8 ) peuvent être gérés dans des bases, les éléments ( 7, 8) pouvant être sélectionnés dans la base respective et instanciés dans la vue ( 33 ) de l'installation.

4. Système suivant l'une des revendications précédentes,
**caractérisé en ce que**
des fonctions ( 3..6, 15..18 ) technologiques peuvent être sélectionnées dans la vue ( 10 ) de projet et dans la vue ( 33 ) de l'installation.

5. Système suivant l'une des revendications précédentes,
**caractérisé en ce que**
des fonctions ( 3..6, 15..18 ) technologiques peuvent être désactivées dans un élément ( 7, 8 ) instancié.

6. Système suivant l'une des revendications précédentes,
**caractérisé en ce que**
des opérations d'existence, pouvant être exécutées dans la vue ( 10 ) de projet par les fonctions ( 15..18 ) technologiques, ont des effets sur les fonctions ( 3..6 ) technologiques dans la vue de l'installation.

7. Système suivant l'une des revendications précédentes,
**caractérisé en ce que**
un élément ( 7, 8 ) dans la vue ( 33 ) de l'installation peut être effacé dans la vue de projet en effaçant toutes les fonctions ( 15..18 ) technologiques qui lui appartiennent.

8. Procédé de structuration et de gestion de fonctions ( 3..6, 15..18 ) technologiques d'une installation d'automatisation, dans lequel on structure des éléments ( 7, 8 ) de l'installation d'automatisation au moyen d'une vue ( 33 ) de l'installation et on représente une fonction ( 3..6, 15..18 ) respectivement dans la vue ( 33 ) de l'installation et dans une vue ( 10 ) de projet, respectivement un appareil ( 1, 2 ) d'automatisation et des fonctions ( 3..6 ) technologiques qui lui appartiennent étant associées à un élément et dans lequel on couple entre elles la vue ( 33 ) de l'installation et la vue ( 10 ) de projet, de manière à ce que la fonction ( 3..6 ) dans la vue ( 33 ) de l'installation soit sélectionnée en même temps par une sélection d'une fonction ( 15..18 ) dans la vue ( 10 ) de projet.

9. Procédé suivant la revendication 8,
**caractérisé en ce qu'**on associe de manière fixe à un élément ( 7, 8 ) respectivement un appareil ( 1, 2 ) d'automatisation et les fonctions ( 3..6 ) technologiques qui lui appartiennent.

10. procédé suivant l'une des revendications 8, 9,
**caractérisé en ce qu'**on gère des éléments ( 7, 8 ) dans des bases, les éléments ( 7, 8 ) dans la base respective étant instanciés dans la vue ( 33 ) de l'installation.

11. Procédé suivant l'une des revendications 8 à 10,
**caractérisé en ce qu'**on choisit des fonctions ( 3..6, 15..18 ) technologiques dans la vue ( 10 ) de projet et dans la vue ( 33 ) de l'installation.

12. procédé suivant l'une des revendications 8 à 11,
**caractérisé en ce qu'**en cas de besoin on désactive des fonctions ( 3..6, 15..18 ) technologiques d'un élément ( 7, 8 ) instancié.

13. Procédé suivant l'une des revendications 8 à 12,
**caractérisé en ce que**
des opérations d'existence, pouvant être exécutées dans la vue ( 10 ) de projet par les fonctions ( 15..18 ) technologiques, ont des effets sur les fonctions ( 3..6 ) technologiques dans la vue de l'installation.

14. Procédé suivant l'une des revendications 8 à 13,
**caractérisé en ce qu'**on peut effacer un élément ( 7, 8 ) dans la vue ( 33 ) de l'installation en effaçant toutes les fonctions ( 15..18 ) technologiques qui lui appartiennent dans la couche de projet.
